# EUROPÄISCHE PATENTSCHRIFT

(11) **EP 1 651 494 B1**
(45) Veröffentlichungstag und Bekanntmachung des Hinweises auf die Patenterteilung: **29.08.2007**
(21) Anmeldenummer: 04740606.1
(22) Anmeldetag: 03.07.2004
(51) Int. Cl.: B60W 10/02, B60W 10/10

(54) **VERFAHREN ZUR STEUERUNG EINES BETÄTIGUNGSAKTUATORS EINER ANFAHRKUPPLUNG EINES KRAFTFAHRZEUGAUTOMATGETRIEBES**
METHOD FOR CONTROLLING AN ACTUATOR OF A STARTING CLUTCH IN THE AUTOMATIC TRANSMISSION OF A VEHICLE
PROCEDE POUR COMMANDER UN DISPOSITIF D'ACTIONNEMENT D'UN EMBRAYAGE DE DEMARRAGE D'UNE BOITE DE VITESSES AUTOMATIQUE DE VEHICULE AUTOMOBILE

(30) Priorität: 29.07.2003 DE 10334451
(43) Veröffentlichungstag der Anmeldung: 03.05.2006
(73) Patentinhaber: ZF FRIEDRICHSHAFEN Aktiengesellschaft, 88038 Friedrichshafen (DE)
(72) Erfinder: HÄRDTLE, Wilhelm, 88677 Markdorf (DE)
(86) Internationale Anmeldenummer: PCT/EP2004/007260
(87) Internationale Veröffentlichungsnummer: WO 2005/018977

(56) Entgegenhaltungen:
- EP-A- 0 312 018

## Beschreibung

Die Erfindung betrifft ein Verfahren zur Steuerung eines Betätigungsaktuators einer Anfahrkupplung eines Kraftfahrzeugautomatgetriebes gemäß dem Oberbegriff des Patentanspruchs 1.

Es ist zumindest unter Kraftfahrzeugführern allgemein bekannt, dass beim Betrieb eines solchen Fahrzeuges Betriebssituationen auftreten können, in denen das Fahrzeug aufgrund widriger Fahrwegeigenschaften nicht von der Stelle zu bewegen ist. Zu denken ist in diesem Zusammenhang beispielsweise an ein Festfahren in tiefem Schnee, losem Sand oder in einem vergleichsweise kurzen und tiefen Fahrbahnloch.

Geübte Fahrer von konventionellen Fahrzeugen mit manuell betätigbaren Schaltgetrieben können sich in der Regel durch ein sogenanntes "Freischaukeln" aus einer derartigen Situation befreien.

EP 0312018 offenbart ein Verfahren gemäß dem Oberbegriff des Anspruchs 1.

Dabei wird bei stillstehendem Fahrzeug mit laufendem Fahrzeugmotor zunächst ein Kupplungspedal betätigt, ein Getriebegang eingelegt und dann das Kupplungspedal entlastet. Das Fahrzeug bewegt sich dann solange, bis die entgegen der Fahrtrichtung wirkenden Kräfte auf das Fahrzeug so groß sind, dass der Fahrer erneut das Kupplungspedal betätigen muss, um ein Abwürgen des Fahrzeugmotors zu verhindern. Anschließend rollt das Fahrzeug über seine Ausgangsposition hinaus zurück, bis es in der Gegenrichtung soweit durch das Fahrweghindernis abgebremst ist, dass es zum Stillstand kommt. In diesem Moment löst der Fahrer dann bei eingelegtem Gang erneut das Kupplungspedal, so dass das Fahrzeug bei seinen nächsten Anfahrversuch mit einem etwas größerem Anlauf und erhöhter Geschwindigkeit versucht, das Fahrweghindernis zu passieren. Der Freischaukelvorgang wird dann solange wiederholt, bis das Fahrzeug befreit oder diese Methode aufgegeben wird.

Diese Vorgehensweise kann von geschickten Fahrern noch unterstützt werden, indem dieser wechselweise und synchron mit dem "Hin- und Herschaukeln" des Fahrzeugs einen Vorwärts- und den Rückwärtsgang einlegt.

Bei Fahrzeugen mit einem Automatgetriebe, insbesondere jedoch bei der Nutzung eines Stufenwechselgetriebes mit automatisch betätigbarer Anfahrkupplung, gestaltet sich die Bewältigung von derartigen Fahrbahnhindernissen schon etwas schwieriger, da der Fahrer nun keinen direkten Einfluss auf die Betätigung der Anfahr- und Schaltkupplung hat.

So ist aus der DE 101 28 853 A1 ein Kraftfahrzeug mit einem automatischen Doppelkupplungsgetriebe bekannt geworden, welches mittels einer besonderen Vorrichtung in die oben beschriebe Freischaukelbetriebsphase gebracht und in dieser manuell gesteuert betrieben werden kann.

Dazu ist gemäß diesem Stand der Technik vorgesehen, dass bei dem Doppelkupplungsgetriebe zur Durchführung des Freischaukelbetriebs sowohl ein Vorwärtsgang als auch der Rückwärtsgang des Getriebes eingelegt sind. Die beiden Kupplungen dieses Lastschaltgetriebes sind dann wechselweise derartig ein- und auskuppelbar, dass das Fahrzeug am Fahrweghindernis kurzzeitig vorwärts und dann kurzzeitig rückwärts angetrieben werden kann. Dazu ist dem Fahrzeugführer eine Betätigungsvorrichtung zur Seite gestellt, mit dem dieser die Kupplungsbetätigung und damit auch die Vorwärts- und Rückwärtsfahrt des Fahrzeugs manuell und nach dessen Vorstellungen steuern kann.

Diese Betätigungsvorrichtung kann Bestandteil einer Schaltvorrichtung zur Signalisierung von Übersetzungsänderungs- und/oder Fahrstufenänderungswünschen sein, die durch vorheriges Betätigen eines gesonderten Schalters in einen "Freischaukelsteuerungsmodus" schaltbar ist. Vorzugsweise kann jedoch eine Schaltvorrichtung zum Einsatz kommen, mit der Getriebegänge sequentiell hoch- oder herunter geschaltet werden können.

Wenngleich diese bekannte Vorrichtung durchaus mit Vorteil für automatische Doppelkupplungsgetriebe einsetzbar ist, so ist diese doch mit dem Nachteil verbunden, dass der Freischaukelbetrieb nicht automatisch abläuft, sondern von dem Fahrzeugführer manuell geschickt gesteuert werden muss. Dies stellt insbesondere weniger geschickte Fahrzeugführer vor das Problem, dass diese dann zwar eine Vorrichtung zum "Freischaukeln" zur Verfügung haben, diese jedoch nicht zielbringend betätigen können. ,

Darüber hinaus ist diese "Freischaukelvorrichtung" bei Automatgetrieben nicht verwendbar, die auf konventionellen Schaltgetrieben beruhen.

Vor diesem Hintergrund soll die Erfindung die Möglichkeit aufzeigen, wie ein Fahrzeug mit einem automatisierten Schaltgetriebe die beschriebenen Fahrwegwidrigkeiten bewältigen kann. Dabei soll abweichend von Stand der Technik auf eine manuelle Beeinflussung des Freischaukelvorgangs weitgehend verzichtet werden, um auch ungeübten Fahrzeugführern deren Nutzung zu ermöglichen. Dennoch soll auch eine manuelle Betriebsweise möglich sein.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass durch eine geschickte, auf die Randbedingungen des Fahrzeugs und des Fahrweghindernisses abgestimmte periodische Betätigung der Anfahrkupplung im Schließ- und Öffnungssinn die gewünschte Freischaukelbewegung des Fahrzeugs erzeugbar und zielführend nutzbar ist.

Demnach wird ein Verfahren zur Steuerung eines Betätigungsaktuators einer Anfahrkupplung eines Kraftfahrzeugautomatgetriebes vorgeschlagen, beim dem der Aktuator von einem Steuerungsgerät so gesteuert wird, dass die Anfahrkupplung bei Vorliegen eines Anfahrwunsches sowie bei eingestelltem Getriebeübersetzungsverhältnis geschlossen und zur Beendigung des Anfahrvorgangs geöffnet wird. Zudem ist vorgesehen, dass die Anfahrkupplung zur Erzeugung der Freischaukelbewegung während eines Anfahrvorgangs durch Ansteuerung des Betätigungsaktuators derartig betrieben wird, dass das von dieser übertragene Drehmoment M_K periodisch schwankt.

Diese periodischen Schwankungen sind dabei rechnerisch derart auf das Fahrzeug und das gerade aktuelle Fahrweghindernis abgestimmt, dass das Fahrzeug automatisch dieses Hindernis überwinden kann. Insbesondere werden als Größen dabei vorzugsweise die Fahrzeuggeschwindigkeit, die Fahrzeugmasse, der Radius der Fahrzeugräder, die Bodenhaftung der Fahrzeugräder und die auf das Fahrzeug bei diesem Herausschaukeln gegen die jeweilige Fahrtrichtung wirkenden und von dem Fahrweghindernis beeinflussten Kräfte berücksichtigt.

Darüber hinaus wird es als vorteilhaft angesehen, dass während des periodischen Betriebs des Betätigungsaktuators beziehungsweise der Anfahrkupplung das Getriebeübersetzungsverhältnis unverändert bleibt, so dass durch solche Freischaukelvorgänge kein erhöhter Verschleiß an Synchronisationsbauteilen des automatisierten Schaltgetriebes feststellbar sein wird.

Mit der periodischen Betätigung der Kupplung wird vorzugsweise dann begonnen, wenn mittels geeigneter Sensoren festgestellt wird, dass die Fahrgeschwindigkeit sehr klein oder Null ist und ein Schlupf an wenigstens einem der Fahrzeugantriebsräder einen vorbestimmten Schwellwert übersteigt. Diese Randbedingung berücksichtigt beispielsweise ein in tiefem Schnee oder in losem Sand festgefahrenes Fahrzeug.

Eine andere Variante der Erfindung sieht vor, dass der periodische Betrieb dann erfolgt, wenn von dem Steuerungsgerät zuvor festgestellt wurde, dass die Fahrgeschwindigkeit sehr klein oder Null ist und dem Antriebsmoment M Z der Fahrzeugräder entgegenwirkende Kräfte einen vorbestimmten Schwellwert übersteigen. Durch diese Maßnahme wird beispielsweise diejenige Betriebssituation berücksichtigt, bei der das Fahrzeug in einer vergleichsweise tiefen Fahrbahnsenke festsitzt.

In einer anderen Ausführungsform der Erfindung ist vorgesehen, dass der periodische Betrieb des Kupplungsaktuators und damit der Anfahrkupplung dann durchgeführt wird, wenn von dem Steuerungsgerät zuvor festgestellt wurde, dass von einem Fahrzeuginsassen ein Betätigungselement zur Aktivierung des periodischen Betriebs betätigt wurde. Dadurch ist es möglich, dass abweichend von einem an sich angestrebten vollautomatischen Herausschaukeln des Fahrzeugs aus dem Hindernis dieses von einem Fahrzeugführer durch individuelle Einflussnahme erfolgen kann.

Nach der Anwahl der manuellen Betriebsweise kann der periodische Betrieb beispielsweise dann ausgelöst werden, wenn der Fahrzeugführer ein Fahrpedal zur Leistungsregelung des Fahrzeugmotors über einen vorbestimmten Stellwinkel hinaus betätigt. Dieser Stellwinkelwert kann derjenige Stellwinkel sein, der als sogenannte "Kick-down-Position" dem Fachmann bekannt ist. Wird das Fahrpedal hinter diese Kick-down-Auslenkung zurückgeführt, beendet das Steuerungsgerät die periodische Betätigung des Kupplungsaktuators automatisch.

Zur weiteren manuellen Beeinflussung eines Freischaukelvorgangs kann vorgesehen sein, dass die Betätigungsfrequenz für den periodischen Betrieb des Aktuators beziehungsweise der Anfahrkupplung durch eine Einstellung an einem anderen, gesonderten Betätigungselement oder an dem Fahrpedal einstellbar ist.

Vorzugsweise sind in dem Steuerungsgerät zudem Berechnungsalgorithmen abgespeichert, mit deren Hilfe zumindest die Betätigungsfrequenz des Aktuators durch eine Analyse der Fahrgeschwindigkeit, der Stellrichtung, des Stellweges und/oder der Stellgeschwindigkeit des Betätigungselements und/oder oder des Fahrpedals berechnet werden kann.

Schließlich sei angemerkt, dass sich das erfindungsgemäße Steuerungsverfahren sowie seine Ausführungsformen besonders gut zur Steuerung eines automatisierten Schaltgetriebes verwenden lässt.

Zur Verdeutlichung der Zusammenhänge ist der Beschreibung eine Zeichnung beigefügt. In dieser zeigen:
- Fig. 1: ein Diagramm, in dem das Kupplungsmoment M_K über den Stellweg S eines Fahrpedals aufgetragen ist und
- Fig. 2: ein Diagramm, in dem das Zugmoment M_Z des Fahrzeugs beziehungsweise der Fahrzeugräder über die Zeit t dargestellt ist.

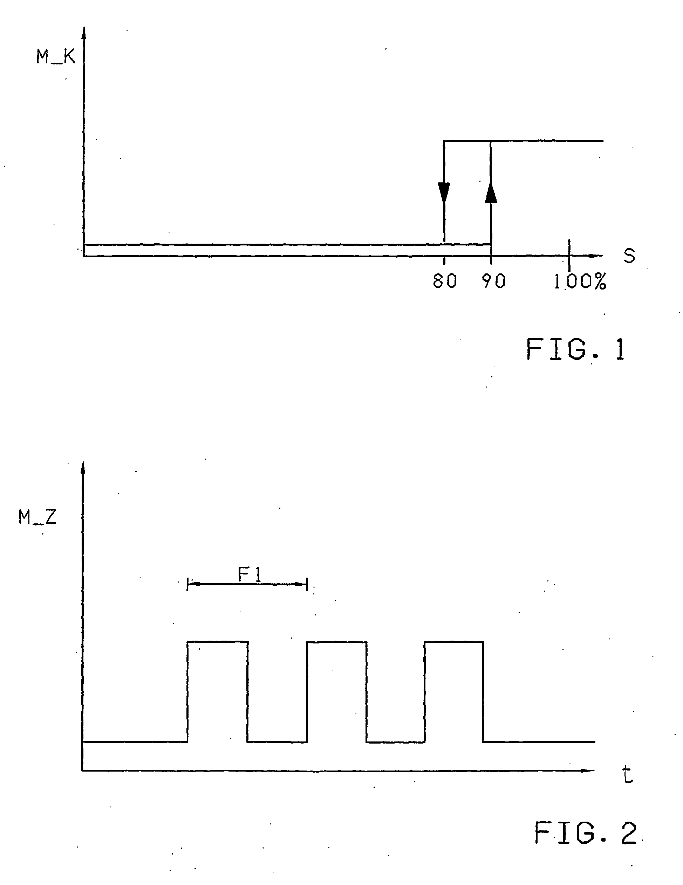

Fig. 1 veranschaulicht daher, dass die Anfahrkupplung über weite Bereiche des Fahrpedalauslenkwinkels S durch übliche Kupplungssteuerungsfunktionen für Anfahr- oder Rangiervorgänge betrieben wird.

Sobald ein Fahrzeugführer bei einer manuellen Betriebsweise des erfindungsgemäßen Steuerungsverfahrens das Fahrpedal jedoch bis zu einer "Kick-down-Position" mit einem Auslenkwinkel von 90 % des maximalen Stellweges ausgelenkt hat, wird die Anfahrkupplung durch eine dementsprechende periodisch Betätigung des Kupplungsaktuators wechselweise geöffnet und wieder geschlossen. Wie die beiden vertikalen Richtungspfeile andeuten, wird dieser Freischaukel-Steuerungsbetrieb solange beibehalten, wie das Fahrpedal über die "Kick-down-Position" hinaus ausgelenkt und das Hindernis des Fahrweges nicht passiert ist.

Fig. 2 stellt dar, dass das Steuerungsgerät aufgrund der eingangs genannten fahrzeug- und fahrwegspezifischen sowie mittels geeigneter Sensoren ermittelten Randbedingungen den Kupplungsaktuator beispielsweise mit einer Betätigungsfrequenz F1 ansteuern kann. Die Amplitude dieser Freischaukelfrequenz kann dabei das von der Kupplung letztlich auf die Antriebsräder des Fahrzeugs übertragene Kupplungsmoment M_K, oder aber das Zugmoment M_Z des Fahrzeugs sein, welches zum Passieren des Fahrweghindernisses benötigt wird.

Sofern sich während des Freischaukelvorgangs jedoch zu berücksichtigende Randbedingungen ändern, kann dies auch zu einer Anpassung der Frequenz F1 führen, mit der die Anfahrkupplung zielführend zu betätigen ist.

Bei dieser Betriebsweise kann der Fahrzeugführer eigenständig kontrollieren, wann er den Freischaukelbetrieb beginnen und beenden möchte.

## Patentansprüche

1. Verfahren zur Steuerung eines Betätigungsaktuators einer Anfahrkupplung eines Kraftfahrzeugautomatgetriebes, bei dem der Aktuator von einem Steuerungsgerät so gesteuert wird, dass die Anfahrkupplung bei Vorliegen eines Anfahrwunsches sowie bei eingestelltem Getriebeübersetzungsverhältnis geschlossen und zur Beendigung des Anfahrvorgangs geöffnet wird, **dadurch gekennzeichnet, dass** die Anfahrkupplung während eines Anfahrvorgangs durch Ansteuerung des Betätigungsaktuators derartig betrieben wird, dass das von dieser übertragene Drehmoment (M_K) periodisch schwankt und die periodische Betätigung des Kupplungsaktuators auf die Eigenarten des Fahrzeugs und auf das aktuelle Fahrweghindernis derartig abgestimmt wird, dass das Fahrzeug vollautomatisch dieses Hindernis überwinden kann, wobei während des periodischen Betriebs des Betätigungsaktuators beziehungsweise der Anfahrkupplung das Getriebeübersetzungsverhältnis unverändert bleibt.

2. Verfahren nach Anspruch 1, **dadurch gekennzeichnet, dass** zur Bestimmung der periodischen Betätigung des Kupplungsaktuators die Fahrzeuggeschwindigkeit, die Fahrzeugmasse, der Radius der Fahrzeugräder, die Bodenhaftung der Fahrzeugräder und/oder die auf das Fahrzeug bei diesem Herausschaukeln wirkenden, gegen die jeweilige Fahrtrichtung wirkenden und von dem Fahrweghindernis beeinflussten Kräfte berücksichtigt werden.

3. Verfahren nach wenigstens einem der vorherigen Ansprüche, **dadurch gekennzeichnet, dass** der periodische Betrieb dann durchgeführt wird, wenn von dem Steuerungsgerät zuvor festgestellt wurde, dass die Fahrgeschwindigkeit sehr klein oder Null ist und ein Schlupf an wenigstens einem der Fahrzeugantriebsräder einen vorbestimmten Schwellwert übersteigt.

4. Verfahren nach wenigstens einem der vorherigen Ansprüche, **dadurch gekennzeichnet, dass** der periodische Betrieb dann erfolgt, wenn die Fahrgeschwindigkeit sehr klein oder Null ist und von dem Steuerungsgerät zuvor festgestellt wurde, dass die dem Antriebsmoment (M_Z) der Fahrzeugräder entgegenwirkenden Kräfte einen vorbestimmten Schwellwert übersteigen.

5. Verfahren nach wenigstens einem der vorherigen Ansprüche, **dadurch gekennzeichnet, dass** der periodische Betrieb dann durchgeführt wird, wenn von dem Steuerungsgerät zuvor festgestellt wurde, dass von einem Fahrzeuginsassen ein Betätigungselement zur Aktivierung des periodischen Betriebs betätigt wurde.

6. Verfahren nach wenigstens einem der vorherigen Ansprüche, **dadurch gekennzeichnet, dass** die Betätigungsfrequenz für den periodischen Betrieb des Aktuators beziehungsweise der Kupplung durch eine Einstellung an dem Betätigungselement ausgewählt wird.

7. Verfahren nach wenigstens einem der vorherigen Ansprüche, **dadurch gekennzeichnet, dass** die Betätigungsfrequenz mittels einer Analyse der Fahrzeuggeschwindigkeit, der Stellrichtung, des Stellweges und/oder der Stellgeschwindigkeit des Betätigungselements errechnet wird.

8. Verfahren nach wenigstens einem der vorherigen Ansprüche, **dadurch gekennzeichnet, dass** als Betätigungselement das Fahrpedal des Fahrzeugmotors genutzt wird.

9. Verfahren nach wenigstens einem der vorherigen Ansprüche, **dadurch gekennzeichnet, dass** der periodische Betrieb dann ausgelöst wird, wenn ein Fahrpedal zur Leistungsregelung eines Fahrzeugmotors über einen vorbestimmten Stellwinkel (Kick-down-Position) hinaus ausgelenkt wurde.

## Claims

1. The invention relates to a method for the control of an actuator of a starting clutch of an automatic transmission of a motor vehicle, with the actuator being controlled by a control unit in such a way that the starting clutch is closed when a starting request is active as well as with a set ratio of transmission, and that it is opened to end the starting operation, **characterized in that** during a starting operation the starting clutch is operated through control of the actuator in such a way that the torque (M_K) transmitted fluctuates periodically, and that this periodic actuation of the clutch actuator is tuned to the peculiarities of the vehicle and the driveway obstacle in such a way that the obstacle can be overcome by the vehicle fully automatically, with the ratio of the transmission remaining unchanged during the periodic operation of the actuator or the starting clutch.

2. A method according to claim 1, **characterized in that** for determination of the periodic actuation of the clutch actuator, the vehicle speed, the vehicle mass, the radius of the vehicle wheels, the grip of the vehicle tires and/or the built-up forces, which act on the vehicle and against the respective driving direction and are influenced by the driveway obstacle are considered.

3. A method according to at least one of the preceding claims, **characterized in that** periodic operation is performed when the control unit detects that the driving speed is very slow or zero and a predetermined threshold value of slip is exceeded on at least one of the powered wheels of the vehicle.

4. A method according to at least one of the preceding claims, **characterized in that** periodic operation is performed when the driving speed is very slow or zero and the control unit detects that the forces counteracting the driving torque (M_Z) exceeded a predetermined threshold value.

5. A method according to at least one of the preceding claims, **characterized in that** periodic operation is performed when the control unit detects that a control element for actuation of the periodic operation was actuated by a vehicle occupant.

6. A method according to at least one of the preceding claims, **characterized in that** the frequency of actuation of periodic operation of the actuator or the clutch is selected by means of a setting on the control element.

7. A method according to at least one of the preceding claims, **characterized in that** the frequency of actuation is determined through analysis of the vehicle speed, the control direction, the control travel, and/or the control speed of the control element.

8. A method according to at least one of the preceding claims, **characterized in that** the gas pedal of the automotive engine is used as control element.

9. A method according to at least one of the preceding claims, **characterized in that** periodic operation is triggered when a gas pedal for power control of an automotive engine is actuated beyond a predetermined operating angle (kickdown position).

## Revendications

1. Méthode de commande d'un actionneur d'un embrayage de démarrage d'une boîte de vitesses automatique d'un véhicule automobile, l'actionneur étant commandé par un dispositif de pilotage de manière à ce que l'embrayage de démarrage est fermé en présence d'un souhait du conducteur, dans la boîte de vitesses étant réglé un rapport de transmission, et ouvert pour terminer la phase de démarrage, **caractérisée en ce que** l'embrayage de démarrage est actionné pendant un processus de démarrage par pilotage de l'actionneur de manière à ce que le couple (M_K) transmis par cet embrayage de démarrage varie périodiquement et l'actionnement périodique de l'actionneur de l'embrayage est ajusté en fonction des particularités du véhicule et de l'obstacle actuel sur la voie de manière à ce que le véhicule puisse franchir cet obstacle de façon complètement automatique, sachant que pendant le fonctionnement périodique de l'actionneur ou de l'embrayage de démarrage le rapport de transmission de la boîte de vitesses reste inchangé.

2. Méthode selon la revendication 1, **caractérisée en ce que** pour la détermination de l'actionnement périodique de l'actionneur de l'embrayage sont pris en considération la vitesse du véhicule, la masse du véhicule, le rayon des roues du véhicule, l'adhérence des roues du véhicule et/ou les forces agissantes sur le véhicule lors du balancement de la caisse et agissantes contre le sens de la marche du véhicule et influencées par l'obstacle sur la voie.

3. Méthode selon au moins une des revendications précédentes, **caractérisée en ce que** le fonctionnement périodique est réalisé dès que le dispositif de commande détecte que la vitesse de déplacement est très petite ou nulle et lorsque un patinage sur au moins une des roues motrices du véhicule dépasse un seuil prédéterminé.

4. Méthode selon au moins une des revendications précédentes, **caractérisée en ce que** le fonctionnement périodique est réalisé dès que la vitesse de déplacement est très petite ou nulle et le dispositif de commande ayant auparavant détecté que les forces agissantes contre le couple d'entraînement (M_Z) des roues du véhicule dépassent un seuil prédéterminé.

5. Méthode selon au moins une des revendications précédentes, **caractérisée en ce que** le fonctionnement périodique est réalisé quand le dispositif de commande détecte auparavant que l'un des passagers a actionné un élément d'actionnement pour activer le fonctionnement périodique.

6. Méthode selon au moins une des revendications précédentes, **caractérisée en ce que** la fréquence d'actionnement pour le fonctionnement périodique de l'actionneur ou de l'embrayage est sélectionnée par un réglage de l'élément d'actionnement.

7. Méthode selon au moins une des revendications précédentes, **caractérisée en ce que** la fréquence d'actionnement est calculée au moyen d'une analyse de la vitesse du véhicule, de la direction de positionnement, de la course de positionnement et/ou de la vitesse de positionnement de l'élément d'actionnement.

8. Méthode selon au moins une des revendications précédentes, **caractérisée en ce que** la pédale de l'accélérateur du moteur du véhicule est utilisée en tant qu'élément d'actionnement.

9. Méthode selon au moins une des revendications précédentes, **caractérisée en ce que** le fonctionnement périodique est déclenché dès qu'une pédale d'accélérateur utilisée pour le réglage de la puissance d'un moteur d'un véhicule est enfoncée au-delà d'un angle de positionnement prédéterminé (position kickdown).
